Europäisches Patentamt

European Patent Office

Office européen des brevets

(19)

(11) Numéro de publication : **0 683 379 A1**

(12) ## DEMANDE DE BREVET EUROPEEN

(21) Numéro de dépôt : **95401125.0**

(22) Date de dépôt : **16.05.95**

(51) Int. Cl.⁶ : **G01B 11/24**

(30) Priorité : **19.05.94 FR 9406238**

(43) Date de publication de la demande :
**22.11.95 Bulletin 95/47**

(84) Etats contractants désignés :
**AT BE CH DE DK ES FR GB GR IE IT LI LU MC NL PT SE**

(71) Demandeur : **SOLLAC (Société Anonyme)**
**Immeuble Pacific,**
**11/13, Cours Valmy,**
**La Défense**
**F-92070 La Défense (FR)**

(71) Demandeur : **BERTIN & CIE SOCIETE ANONYME**
**59, rue Pierre Curie**
**F-78370 Plaisir (FR)**

(72) Inventeur : **Maillart, Jean-Luc, Henri, Raoul**
**601, Domaine de la salle**
**F-13320 Bouc Bel Air (FR)**
Inventeur : **Lequime, Michel**
**6, rue des Souries**
**F-13510 Eguilles (FR)**
Inventeur : **Bellamy, Pascale**
**8 rond point de Malgeneste**
**F-60300 Senlis (FR)**
Inventeur : **De Smet, Gabriel**
**30 Boulevard du lac**
**F-95880 Enghien les Bains (FR)**

(74) Mandataire : **Cabinet Martinet & Lapoux**
**BP 405**
**F-78055 Saint Quentin en Yvelines Cédex (FR)**

(54) **Mesure tridimensionnelle de la surface d'un objet de grande dimension.**

(57) Un procédé et un dispositif de mesure tridimensionnelle sont destinés à la mesure rapide et précise d'objets (15) de grande dimension, tels que véhicules. Le procédé comprend les étapes de déterminer approximativement des positions de mesure d'un capteur de mesure de forme (3) ; positionner le capteur (3) successivement aux positions de mesure pour relever la forme de portions superficielles de l'objet, les portions superficielles étant représentées par des points de l'objet dont les coordonnées sont exprimées dans un référentiel lié au capteur ; repérer précisément les positions du capteur aux positions déterminées approximativement, dans un référentiel fixe prédéterminé ; et transformer les coordonnées de points de portions superficielles exprimées dans le repère lié au capteur en des coordonnées exprimées dans le référentiel fixe en fonction des positions repérées du capteur.

FIG.1

EP 0 683 379 A1

Jouve, 18, rue Saint-Denis, 75001 PARIS

La présente invention concerne un procédé de mesure tridimensionnelle d'objets et plus particulièrement d'objets de grande dimension, ainsi qu'un dispositif de mesure tridimensionnelle incluant un moyen de mesure mobile qui n'est jamais en contact avec les objets à mesurer.

De nombreuses machines à mesurer tridimensionnelles sont connues. Par exemple, une machine de type col de cygne est classiquement utilisée en métrologie. Ce type de machine offre une bonne précision de mesure, mais est réservée à des objets à mesurer d'encombrement et de masse réduits typiquement inférieurs à un mètre et cent kilogrammes. Une machine de type portique, de type potence ou de type pont est adaptée à des objets de grande dimension mais n'a pas une précision aussi bonne, en raison de l'hétérogénéité de sa structure et du nombre d'éléments mobiles qu'elle comprend.

D'autre part, pour des objets de grande dimension, par exemple d'environ cinq à dix mètres de long, il est connu d'utiliser un système de mesure par intersection comprenant par exemple deux théodolites déplaçables autour de l'objet à mesurer. Chaque fois que les théodolites sont déplacés et positionnés, l'orientation de chaque théodolite par rapport à un référentiel fixe et par rapport à l'autre théodolite est nécessairement à déterminer. Les mesures sont ensuite effectuées point par point. La précision des mesures réalisées par un système de mesure par intersection est du même ordre que celle obtenue grâce à une machine à mesurer tridimensionnelle de type col de cygne. Cependant la mise en oeuvre des deux théodolites est délicate et la mesure d'un objet est longue.

La présente invention vise à fournir un procédé de mesure tridimensionnelle avec lequel la forme d'un objet de grande dimension est acquise de manière précise et plus rapidement et précisément que selon la technique antérieure.

A cette fin, un procédé de mesure tridimensionnelle de la surface d'un objet par un moyen de mesure de forme est caractérisé en ce qu'il comprend les étapes de

- déterminer approximativement des positions de mesure du moyen de mesure de forme,
- positionner le moyen de mesure de forme successivement aux positions de mesure déterminées pour relever la forme de portions superficielles de l'objet à mesurer, les portions superficielles relevées étant chacune représentées par des points de l'objet dont les coordonnées sont exprimées dans un référentiel lié au moyen de mesure de forme,
- repérer précisément dans un référentiel fixe prédéterminé chacune desdites positions du moyen de mesure de forme par un moyen de repérage, et
- transformer les coordonnées des points de portions superficielles exprimées dans le repère lié au moyen de mesure de forme en des coordonnées desdits points exprimées dans le référentiel fixe en fonction respectivement des positions du moyen de mesure de forme repérées dans le référentiel fixe.

Au sens de l'invention, une position de moyen de mesure est définie non seulement par la localisation, c'est-à-dire les coordonnées du moyen de mesure dans un référentiel, mais également par l'orientation du moyen de mesure, c'est-à-dire les paramètres directifs de cette orientation.

L'étape préliminaire de déterminer approximativement des positions de mesure est un apprentissage au cours duquel la forme approximative de l'objet est acquise et qui assiste l'étape ultérieure de repérer. Ladite étape préliminaire comprend les étapes de :

- mailler une surface de l'objet à mesurer en des mailles superficielles,
- sélectionner au moins un point sur chaque maille,
- définir un axe sensiblement perpendiculaire à la maille passant par ledit au moins un point, et
- déterminer une position de mesure sensiblement située sur ledit axe.

Selon une première réalisation, l'étape de mailler comprend également les étapes de :

- positionner un moyen de mesure de distance en des positions prédéterminées successives réparties dans un espace de mesure,
- mesurer une distance du moyen de mesure de distance par rapport à l'objet à mesurer pour chacune des positions prédéterminées du moyen de mesure de distance, et
- déterminer les mailles de l'objet à mesurer en fonction de la distance mesurée.

L'étape de mailler comprend plus précisément les étapes de :

- positionner au moins un moyen de mesure de distance en des premières positions prédéterminées successives réparties dans un plan parallèle à un support sur lequel repose l'objet, et mesurer une première distance du moyen de mesure de distance par rapport à l'objet pour chacune des premières positions prédéterminées,
- calculer des secondes positions respectivement en fonction des premières positions et des premières distances afin que les secondes positions soient à des secondes distances par rapport à l'objet comprises dans un intervalle prédéterminé,
- positionner le moyen de mesure de distance successivement aux secondes positions et mesurer une seconde distance du moyen de mesure de distance par rapport à l'objet pour chacune des secondes positions prédéterminées, et
- déterminer les mailles de l'objet à mesurer en fonction des secondes distances mesurées.

En outre, l'étape de mailler comprend l'étape de déterminer au moins une zone de l'espace dans laquelle ne se trouve aucune des positions de mesure du moyen de mesure de forme.

Les étapes incluses dans l'étape de mailler sont réalisées rapidement, sans exigence sur la précision de positionnement et de mesure. Les mailles déterminées sont une modélisation approximative de l'objet à mesurer. En variante, ces étapes peuvent être remplacées par une connaissance a priori de l'objet à mesurer, résultant par exemple d'une modélisation précédente.

Selon un autre aspect de l'invention, l'étape de repérer comprend les étapes de :
- pointer un moyen de repérage lié au moyen de mesure de forme successivement vers au moins trois points prédéterminés dans le référentiel fixe,
- déterminer les orientations du moyen de repérage dans le référentiel fixe pour les pointages successifs du moyen de repérage,
- définir un référentiel de repérage lié au moyen de repérage, en fonction des trois points et des orientations, et
- établir une première matrice de transformation du référentiel de repérage au référentiel fixe.

En outre, l'étape de transformer comprend les étapes de :
- établir une seconde matrice de transformation du référentiel lié au moyen de mesure au référentiel de repérage, et
- établir une troisième matrice de transformation du référentiel lié au moyen de mesure de forme au référentiel fixe, en fonction des première et seconde matrices.

Les étapes de repérer la position du moyen de mesure et de transformer le résultat de la mesure sont de préférence réalisées avec une grande précision de sorte que le résultat final de la mesure soit précis.

L'invention concerne également un dispositif de mesure tridimensionnelle pour mettre en oeuvre le procédé de mesure selon l'invention, comprenant un moyen mobile de mesure de forme d'objet sans contact avec l'objet à mesurer. Selon l'invention, ce dispositif comprend, en outre,
- un moyen mobile de mesure de distance pour mesurer des distances du moyen de mesure de distance par rapport à l'objet à mesurer pour des positions de mesure prédéterminées du moyen de mesure de distance,
- des moyens pour positionner successivement le moyen de mesure de distance aux positions de mesure prédéterminées, puis pour positionner le moyen de mesure de forme à des positions déterminées en fonction des positions de mesure prédéterminées du moyen de mesure de distance et des distances mesurées afin que le moyen mobile de mesure de forme relève la forme de portions superficielles de l'objet à mesurer aux positions de mesure déterminées, et
- des moyens pour repérer la position du moyen de mesure de forme dans un référentiel fixe prédéterminé.

De préférence, le moyen de mesure de distance comprend au moins un transducteur à ultrasons, ou bien une rampe portant des transducteurs à ultrasons, ou bien encore deux rampes sensiblement perpendiculaires portant chacune des transducteurs à ultrasons.

Selon une autre caractéristique, le moyen de mesure de forme comprend une sonde optique pour relever la forme de portions superficielles de l'objet à mesurer.

Avantageusement, les moyens pour repérer comprennent une caméra liée au moyen de mesure d'une manière indépendante en orientation, et des panneaux fixes de repérage sur des faces desquels sont situées des cibles de repérage dont les coordonnées sont connues dans le référentiel fixe.

Lorsque les moyens pour positionner sont des éléments tels que traverse et/ou crémaillère mobile sur une structure porteuse encadrant l'objet à mesurer, le moyen de mesure de forme comprend de préférence un moyen pour détecter la proximité d'obstacle lors d'un déplacement du moyen de mesure de forme. Par exemple, l'obstacle peut être un montant de la structure porteuse.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective d'un dispositif de mesure tridimensionnelle selon l'invention, équipé d'un capteur de mesure de forme;
- la figure 2 est un bloc-diagramme des étapes principales d'un procédé de mesure tridimensionnelle selon l'invention;
- la figure 3 est un algorithme de détermination d'un maillage surfacique d'objet selon l'invention;
- la figure 4 est une vue schématique d'une rampe de transducteurs à ultrasons selon l'invention;
- la figure 5 est une vue en perspective schématique d'une rampe de transducteurs à ultrasons, montrant des positions de celle-ci dans un référentiel fixe ;
- la figure 6 montre schématiquement un fragment de maillage surfacique et de trajectoire de capteur de mesure selon l'invention;
- la figure 7 est un algorithme de détermination d'une trajectoire de capteur de mesure de forme selon l'invention;

- la figure 8 est une vue schématique d'un capteur de mesure de forme selon l'invention;
- la figure 9 est un diagramme schématique du capteur de mesure de forme au-dessus d'une portion superficielle d'un objet à mesurer; et
- la figure 10 est un algorithme de mesure de forme selon l'invention.

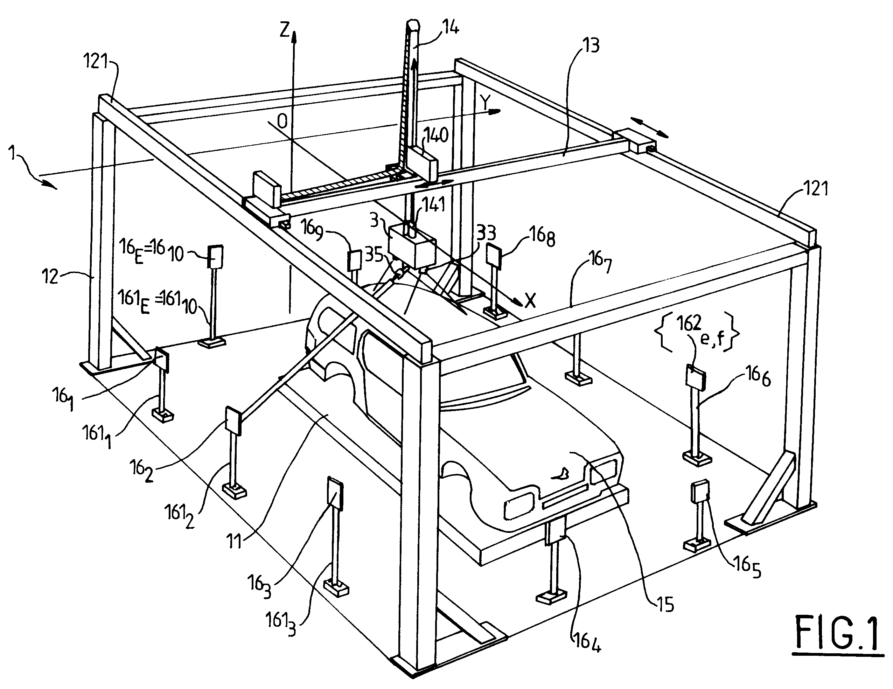

En référence à la figure 1, un **dispositif de mesure tridimensionnelle** comprend un portique de mesure 1 de type pont, commandé par un ordinateur non représenté. Le portique comprend une structure fixe de montants et poutres 12 délimitant un volume parallélépipédique, par exemple cubique, au-dessus et autour d'un plateau 11 reposant sur le sol destiné à recevoir un objet à mesurer.

Deux poutres horizontales parallèles définissant deux arêtes longitudinales supérieures du volume parallélépipédique supportent chacune un rail 121. Sur les deux rails parallèles 121 sont guidés deux petits chariots moteur et mené constituant les extrémités d'une traverse 13 déplaçable dans un plan horizontal définissant la face supérieure dudit volume. La traverse 13 constitue un rail de guidage pour un chariot 140 supportant un moyen moteur pour déplacer une crémaillère 14 à la fois longitudinalement et orthogonalement à la traverse 13 dans un plan vertical. A l'extrémité inférieure de la crémaillère 14 est fixé un outil préhenseur 141 pour prendre des outils, notamment un capteur de mesure comme détaillé dans la suite. L'extrémité inférieure de la crémaillère 14 est ainsi déplaçable en une multitude de positions à l'intérieur du volume parallélépipédique précédemment défini. Les déplacements de la traverse 13 et de la crémaillère 14 sont réalisés par un ensemble de moteurs d'entraînement à courant continu non représentés, commandés par l'ordinateur. Le portique comprend également des amortisseurs de vibration non représentés, ou est installé sur une dalle flottante non représentée, pour amortir les vibrations provoquées par les déplacements des éléments mobiles, traverse et crémaillère.

Les dimensions du portique dépendent de la taille des objets à mesurer; le portique a par exemple une longueur d'environ 10 mètres, une largeur d'environ 8 mètres et une hauteur d'environ 5 mètres et est destiné à la mesure d'objets de grande dimension. Par exemple, à la figure 1, l'objet à mesurer est un véhicule ou la carosserie d'une automobile 15, ou une pièce de carrosserie modifiée, ou encore l'habillage d'une machine, posé sur le plateau 11 et éventuellement fixé sur celui-ci pour demeurer immobile pendant la durée des mesures.

En variante, le portique est remplacé par une structure à potence, ou par un robot articulé et guidé sur un rail.

Un référentiel orthogonal comprenant une origine O et trois axes X, Y, Z concourant en O est associé au portique 1. L'origine 0 est localisée sur un petit côté du portique, l'axe X est horizontal et parallèle aux plus grands côtés du portique, l'axe Y est horizontal et parallèle aux plus petits côtés du portique et l'axe Z est vertical et compris dans ledit petit côté. La position et l'orientation du référentiel (O, X, Y, Z) sont déterminées arbitrairement et sont fixes. En pratique, le référentiel (O,X,Y,Z) est matérialisé par une table, ou marbre, fixe et horizontale qui permet en outre une calibration, ou étalonnage, préalable du capteur de mesure.

En outre, le dispositif de mesure comprend des panneaux de repérage $16_1$ à $16_E$ dont le rôle sera exposé dans la suite, E dénotant un entier positif valant à titre d'exemple 10. Les panneaux $16_1$ à $16_E$ sont fixés respectivement sur des supports rigides à tige verticale $161_1$ à $161_E$ disposés sur le sol à l'extérieur du volume de mesure et répartis autour de celui-ci. Les tiges $161_1$ à $161_E$ ont des longueurs différentes entre elles de sorte que les panneaux soient à des hauteurs différentes. Une des faces d'un panneau $16_e$ dirigée vers le volume de mesure comprend des cibles $162_{e,1}$ à $162_{e,F}$ régulièrement réparties sur la face, l'indice e variant de 1 à E. Chaque cible $162_{e,f}$, l'indice f variant de 1 à l'entier F de l'ordre de quelques dizaines, est une surface diffusante plane, par exemple un disque ou un anneau, de petite dimension. En variante, la cible $162_{e,f}$ est une sphère diffusante qui a la propriété de diffuser la lumière avec une distribution identique dans toutes les directions. Les cibles sont éclairées par des sources lumineuses non représentées, par exemple par une ou deux sources lumineuses pour chaque panneau de repérage. Les panneaux $16_1$ à $16_E$ sont fixes et la position de chaque cible $162_{e,f}$ est repérée par exemple par une mesure par théodolite(s) de sorte que chaque cible est repérée par un point de coordonnées exprimées dans le référentiel fixe (O, X, Y, Z).

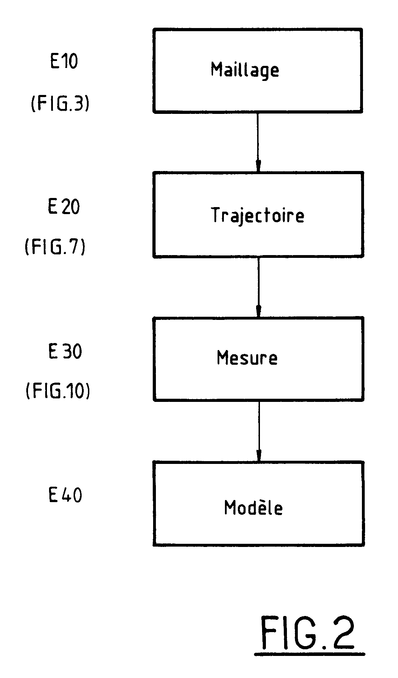

Le **procédé de mesure tridimensionnelle** est décrit en référence à la figure 2 et est réalisé sous la forme d'un algorithme comprenant quatre étapes principales E10 à E40 programmées dans l'ordinateur.

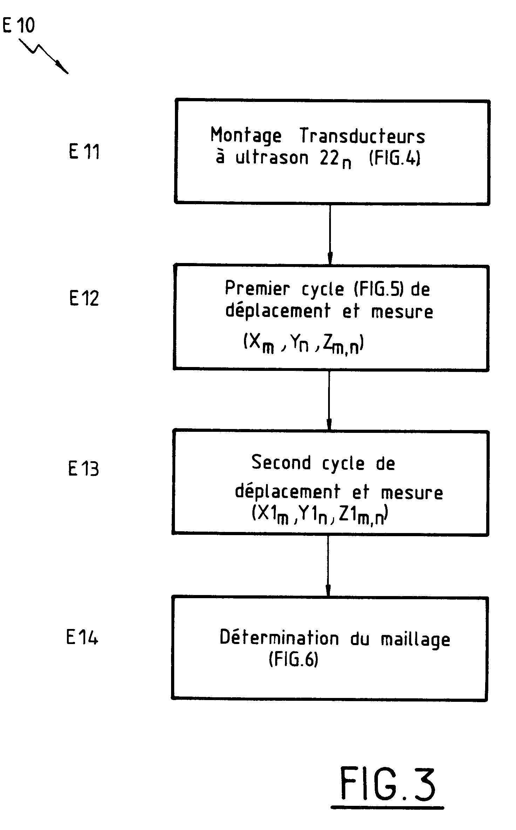

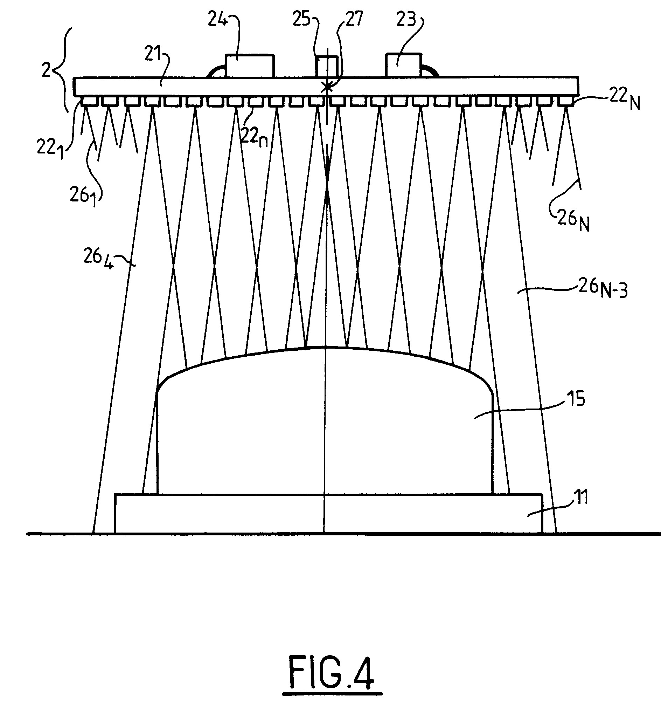

L'étape E10 est la détermination approximative de l'enveloppe superficielle globale de l'objet à mesurer. A la fin de cette étape est produit un modèle approximatif de l'objet à mesurer sous la forme d'un maillage. L'étape principale E10 comprend quatre étapes E11 à E14 qui sont décrites en référence à la figure 3.

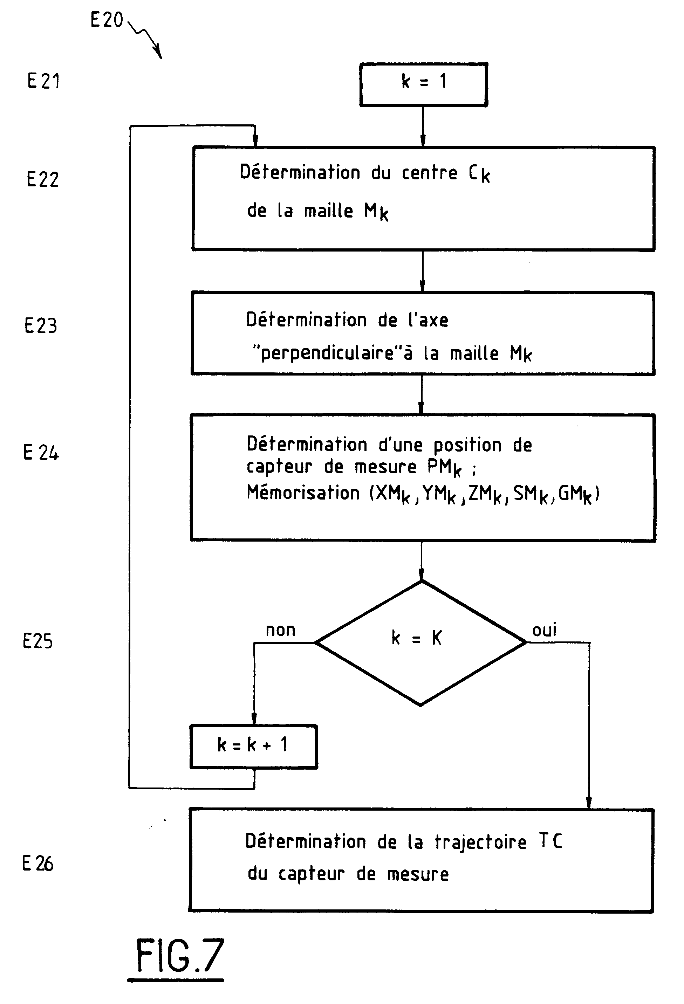

L'étape principale E20 consiste en la détermination de la trajectoire d'un capteur de mesure de forme autour de l'objet à mesurer, en fonction du maillage de l'objet déterminé à l'étape E10. L'étape principale E20 comprend six étapes E21 à E26 qui sont décrites en référence à la figure 7.

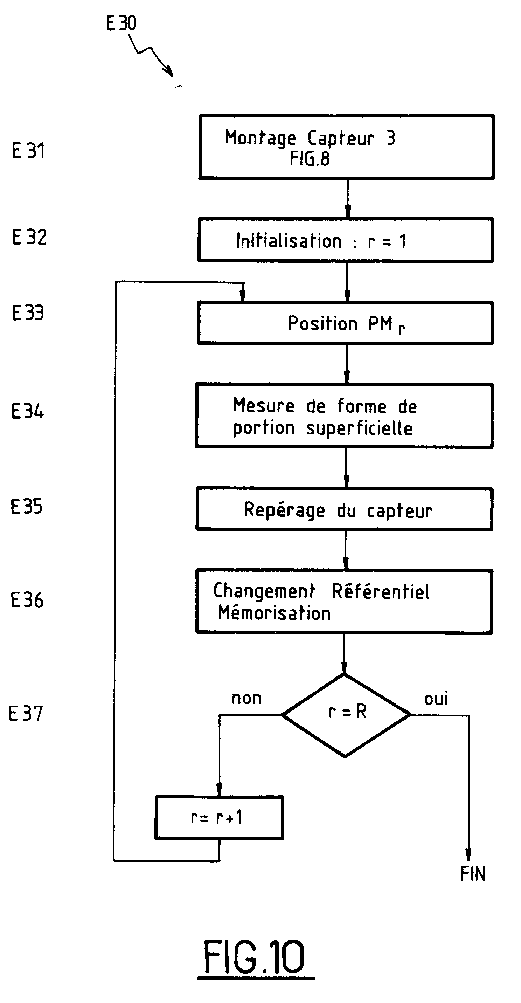

L'étape principale E30 concerne la mesure tridimensionnelle proprement dite de portions superficielles de l'objet par le capteur suivant la trajectoire déterminée précédemment. Elle comprend des opérations de déplacement du capteur, de relevé de forme de portion superficielle de l'objet et de repérage de la position du capteur qui sont décrites par les étapes E31 à E37 en référence à la figure 10. A la fin de l'étape E30 sont acquises précisément les coordonnées des points de mesure de la surface de l'objet à mesurer.

L'étape principale E40 traite les points de mesure acquis à l'étape E30 pour déterminer un modèle mathématique de l'objet, ce modèle étant destiné par exemple à être interprété par un logiciel de CAO (Conception Assistée par Ordinateur). Ce modèle peut être destiné notamment à la comparaison d'un objet par rapport à son modèle réalisé à l'aide d'un logiciel de CAO, ou à la comparaison d'un objet par rapport au modèle de l'outil emboutisseur avec lequel l'objet a été réalisé, ou encore à la modélisation d'un objet prototype tel qu'une maquette de style.

L'étape principale E40 comprend des étapes de maillage, d'interpolation et de lissage qui dépendent de l'utilisation souhaitée de la mesure tridimensionnelle réalisée.

Selon la figure 3, **l'étape E10 de détermination de l'enveloppe globale d'un objet** 15 reposant sur le plateau de mesure 11 comprend une première étape E11 de montage sur le portique de moyens de mesure de distance sous la forme de transducteurs à ultrasons.

En référence à la figure 4, une **rampe de transducteurs** 2 comprend une poutrelle porteuse 21 sur laquelle sont montés N transducteurs $22_1$ à $22_N$, où N est un entier qui dépend de la dimension des objets à mesurer et du portique; pour un portique tel que décrit, N vaut à titre d'exemple 24. La rampe 2 comprend également un circuit électronique 23 pour la mise en forme et l'échange de signaux entre les transducteurs $22_1$ à $22_N$ et l'ordinateur non représenté, un circuit d'alimentation électrique 24 pour alimenter les transducteurs et le circuit 23, et une extrémité de préhension 25 pour être prise par l'outil préhenseur 141 de la crémaillère 14 du portique.

Les transducteurs $22_1$ à $22_N$ sont alignés régulièrement le long de la poutrelle 21 et orientés dans une même direction de sorte que les cônes $26_1$ à $26_N$ d'émissivité des transducteurs soient tous dirigés suivant la même direction orthogonale à la poutrelle 21. En variante, des transducteurs situés à une extrémité ou aux deux extrémités de la poutrelle 21 ont un cône d'émissivité dont l'axe présente un léger angle par rapport à la direction orthogonale à la poutrelle 21 et est dirigé dans le plan de la figure 4 vers le centre de la poutrelle 21 afin que des bords sensiblement verticaux de l'objet à mesurer 15 soient "balayés" par les transducteurs d'extrémité lors des cycles de déplacement et mesure exposés dans la suite. Selon une autre variante, des transducteurs ont un cône d'émissivité dont l'axe présente un léger angle par rapport à la direction orthogonale à la poutrelle 21 mais est dirigé cette fois en avant ou en arrière du plan de la figure 4.

Dans tous les cas, les transducteurs ultrasoniques ont une résolution de l'ordre du centimètre dans une plage de mesure d'environ 0,5 à 5 mètres, et un cône d'émissivité entre environ 15° et 30°.

La rampe de transducteurs 2 est fixée à la crémaillère 14 par l'intermédiaire de l'extrémité de préhension 25 de la rampe qui est liée à l'outil préhenseur 141 de la crémaillère 14. Le montage est effectué manuellement par un opérateur ou automatiquement par un changeur d'outil commandé. Lorsque la rampe 2 est montée à l'extrémité inférieure de la crémaillère 14, la rampe 2 est parallèle à la traverse 13 et occupe sensiblement toute la largeur du volume parallélépipédique intérieur au portique 1 entre les montants de celui-ci.

Les cônes d'émissivité des transducteurs sont dirigés verticalement vers le bas; ou suivant les variantes, certains cônes d'émissivité sont dirigés légèrement vers le centre du portique, ou encore légèrement en avant et en arrière du plan de la figure 4.

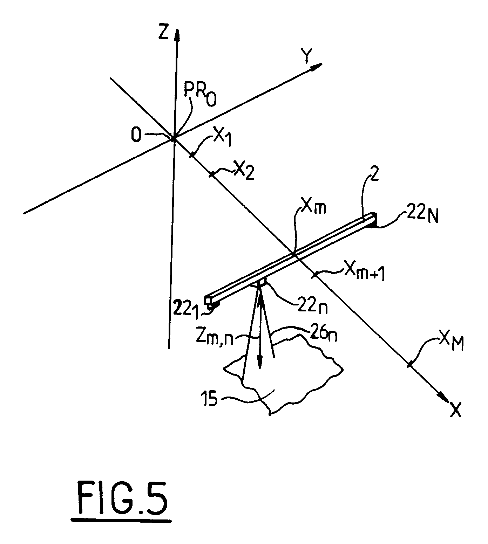

En référence à la figure 5, l'étape E12 comprend le déplacement de la rampe 2 en une position $PR_O$ telle que la rampe 2 est à une hauteur maximale et à une extrémité du portique. Cette position correspond par exemple à la coïncidence de l'origine O et du centre 27 de la rampe 2, l'axe longitudinal de la rampe coïncidant alors avec l'axe Y.

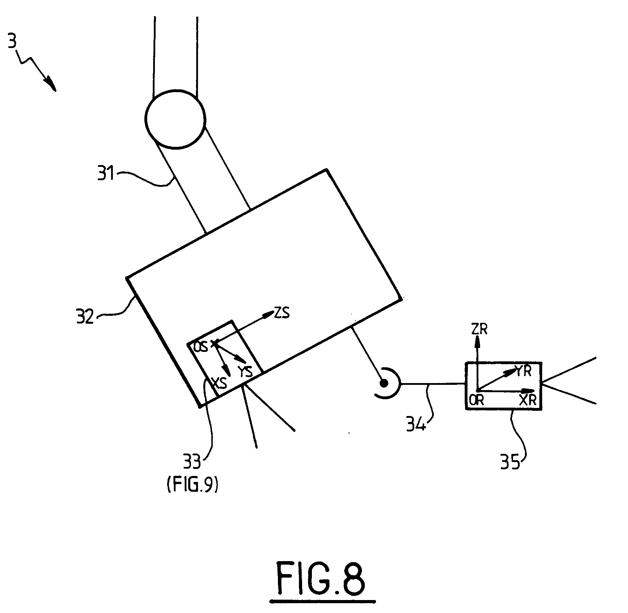

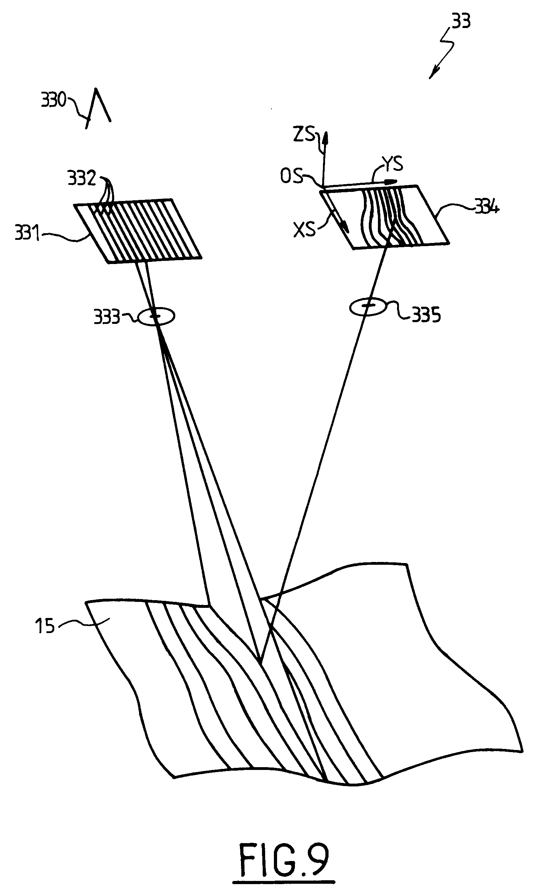

L'étape E12 comprend un cycle de déplacement de la rampe de transducteurs suivant l'axe X, la rampe étant à une cote constante sur l'axe Z et parallèle à l'axe Y. Au cours du cycle de déplacement, la rampe 2 est déplacée et positionnée automatiquement en une pluralité de premières positions successives $PR_1$ à $PR_M$ repérées respectivement par des abscisses $X_1$ à $X_M$ réparties sur toute la dimension du portique suivant l'axe X. Ainsi la rampe 2 balaie un plan horizontal parallèle au plateau 11 sur lequel repose l'objet 15 à mesurer. Le nombre M de premières positions et la distance entre deux premières positions adjacentes sont fixes ou sélectionnables par un opérateur en fonction de la taille de l'objet à mesurer. De préférence, la distance entre deux positions adjacentes de mesure est inférieure aux dimensions du champ de la sonde de mesure utilisée à l'étape E30, comme détaillé en référence à la figure 9.

A chacune des premières positions $PR_m$ $(X_m)$ de la rampe 2, m étant un indice entier compris entre 1 et M, une série de mesure est effectuée au moyen de mises en fonctionnement des transducteurs $22_1$ à $22_N$. Un transducteur $22_n$ mis en fonctionnement, n étant un indice entier compris entre 1 et N, émet un faisceau ultrasonique vers le bas et, en fonction du temps de réception de l'écho renvoyé, contribue à évaluer la distance parcourue par le faisceau.

De préférence, les transducteurs $22_1$ à $22_N$ sont mis en fonctionnement successivement de manière à éviter les interférences entre les échos reçus par les différents transducteurs. Le résultat d'une mesure par un transducteur $22_n$ lorsque la rampe 2 est en une position $PR_m$ est un premier triplet de valeurs $(X_m, Y_n, Z_{m,n})$ dans lequel $X_m$ est l'abscisse de la première position $PR_m$ de la rampe 2 suivant l'axe X, $Y_n$ est la première position du transducteur $22_n$ suivant l'axe Y, et $Z_{m,n}$ est le résultat de la mesure par le transducteur $22_n$, exprimé sous la forme d'une première distance verticale à l'objet par rapport à la cote de la rampe. Le triplet $(X_m, Y_n, Z_{m,n})$ est mémorisé par l'ordinateur. Lorsque la rampe 2 a parcouru toute la dimension du portique suivant l'axe X, M x N premiers triplets $(X_1, Y_1, Z_{1,1})$ à $(X_M, Y_N, Z_{M,N})$ sont mémorisés.

Un contrôle de cohérence est effectué sur les triplets pour filtrer et éliminer des mesures aberrantes telles que par exemple une valeur de cote $Z_{m,n}$ différente de plus d'un seuil prédéterminé par rapport aux cotes voisines $Z_{m-1,n}$, $Z_{m+1,n}$, $Z_{m,n-1}$ et $Z_{m,n+1}$. Le résultat du contrôle de cohérence est un ensemble de triplets corrigé $(X_m, Y_n, Z_{m,n})$ qui est utilisé pour déterminer la trajectoire du cycle de déplacement de l'étape E13 qui est maintenant décrite.

L'étape E13 comprend un cycle de déplacement de la rampe 2 depuis l'abscisse $X_M$ jusqu'à l'abscisse $X_1$, encore sans déplacement suivant l'axe Y, mais cette fois à des secondes cotes $ZP_M$ à $ZP_1$ déterminées en fonction des premières distances précédemment mesurées $Z_{m,n}$.

L'objectif de ce second cycle de déplacement est de mesurer plus précisément l'objet à mesurer. Pour cela, à chaque abscisse $X_m$, la position verticale $ZP_m$ de la rampe 2 est calculée de sorte que la rampe 2 soit à une seconde distance de mesure DM de l'objet à mesurer comprise dans un intervalle prédéterminé, typiquement 0,6 à 1 mètre environ. Par exemple, la valeur de $ZP_m$ est égale au maximum des valeurs mesurées $Z_{m,1}$ à $Z_{m,N}$ majoré de la distance DM. En variante, la valeur de $ZP_m$ est égale au maximum de la valeur moyenne des valeurs mesurées $Z_{m,1}$ à $Z_{m,N}$ majorée de la distance DM, et de la valeur maximum des valeurs $Z_{m,1}$ à $Z_{m,N}$ majorée d'une distance minimale de mesure inférieure à DM et égale à environ 0,4 mètre pour des transducteurs ultrasoniques. Dans tous les cas, une distance minimale de sécurité entre la rampe 2 et l'objet à mesurer 15 est prévue pour empêcher toute collision.

Lorsque les secondes cotes $ZP_m$ de la rampe 2 sont déterminées, la rampe 2 est positionnée successivement à chacune des secondes positions définies par une abscisse $X_m$ et une cote $ZP_m$ et une série de mesure de seconde distance est effectuée de manière analogue à la première série de mesure à l'étape E12. Chaque seconde distance verticale mesurée entre le transducteur correspondant et l'objet 15 est corrigée de la valeur de la cote de la rampe 2 de sorte que toutes les secondes distances sont exprimées dans le référentiel (O, X, Y, Z) précédemment défini. En variante, le calcul d'une seconde cote $ZP_m$ est immédiatement suivi du positionnement de la rampe à position définie par les coordonnées $X_m$ et $ZP_m$, puis des mesures successives par les transducteurs $22_1$ à $22_N$. La seconde cote correspondant à la seconde position suivante est ensuite calculée et ainsi de suite. Dans tous les cas, lorsque la rampe a parcouru toute la dimension du portique suivant l'axe X, la rampe est positionnée à nouveau à la position $PR_O$ et est dissociée de l'outil préhenseur 141. M x N seconds triplets $(X1_1, Y1_1, Z1_{1,1})$ à $(X1_M, Y1_N, Z1_{M,N})$ exprimés dans le référentiel fixe sont mémorisés, dans lesquels $X1_1$ à $X1_M$ dénotent les abscisses successives de la rampe, $Y1_1$ à $Y1_N$ dénotent les ordonnées des transducteurs $22_1$ à $22_N$ et $Z1_{1,1}$ à $Z1_{M,N}$ sont les cotes successivement mesurées de l'objet 15. Les triplets $(X1_m, Y1_n, Z1_{m,n})$ sont une approximation de l'objet à mesurer 15. Cette approximation est peu précise en raison de l'incertitude de positionnement et de dimensionnement des poutres et montants du portique 1, de l'incertitude de positionnement de la rampe 2 par rapport au portique 1, et de la résolution des transducteurs à ultrasons. Toutefois cette approximation est effectuée rapidement. Selon une première variante, la rampe 2 est en outre déplaçable suivant l'axe Y avec une amplitude de déplacement au plus égale à la distance entre deux transducteurs adjacents de sorte que l'opérateur puisse choisir un pas de mesure suivant l'axe Y qui soit inférieur à la distance entre deux transducteurs adjacents. Selon une seconde variante plus rapide mais moins précise, l'étape E13 n'est pas effectuée et les triplets $(X1_m, Y1_n, Z1_{m,n})$ sont remplacés dans la suite par les triplets $(X_n, Y_n, Z_{m,n})$ déterminés à l'étape E12. Le choix entre ces deux variantes résulte d'un compromis entre rapidité et précision et est de préférence effectué par l'opérateur en fonction de la forme plus ou moins complexe de l'objet ou de la précision exigée des reproductions de l'objet.

En variante, la rampe 2 est remplacée par une première rampe de transducteurs fixée horizontalement à la traverse 13 et par une seconde rampe de transducteurs fixée verticalement à une extrémité de la traverse 13, c'est-à-dire sensiblement perpendiculaire à la première rampe. Les transducteurs de la première rampe sont dirigés vers le bas et les transducteurs de la seconde rampe sont dirigés horizontalement vers le centre du portique. Ces deux ensembles de transducteurs au nombre total d'environ 40 portés par les rampes sont déplacés suivant l'axe X sur toute la course de la traverse 13, respectivement à des coordonnées constantes sur les axes Y et Z. La rampe verticale est par exemple fixée à l'une des extrémités de la traverse 13 pour un premier déplacement, puis à l'autre extrémité de la traverse 13 pour un second déplacement, de manière à balayer deux côtés opposés de l'objet à mesurer 15 qui sont longitudinaux selon la figure 1.

Selon une autre variante, la rampe de transducteurs 2 est remplacée par cinq transducteurs ultrasoniques montés sur un support lié à l'outil préhenseur 141 de la crémaillère 14. Quatre des cinq transducteurs sont orientés suivant quatre directions d'un plan horizontal et détectent la proximité d'obstacle lors d'un déplacement du support afin d'empêcher une collision lors du déplacement du support. Le cinquième transducteur est orienté verticalement vers le bas et est utilisé pour les mesures. Le support de transducteur est déplacé suivant deux cycles de déplacement et de mesure successifs. Le premier cycle de déplacement et de mesure est effectué à hauteur constante maximale et positionne le support de transducteurs en une pluralité de positions suivant les axes X et Y de sorte que le cinquième transducteur est positionné successivement en les points de coordonnées $(X_m, Y_n)$ précédemment définies. Le second cycle de déplacement et de mesure est effectué à hauteur variable en fonction des mesures du premier cycle. Un contrôle de cohérence est effectué sur les valeurs mesurées.

Selon encore une variante, les moyens de mesure de distance ne sont pas des transducteurs à ultrasons, mais sont par exemple des capteurs laser, ou tout autre moyen de mesure permettant une mesure rapide de l'objet 15.

Dans tous les cas, l'ensemble des M x N triplets $(X1_m, Y1_n, Z1_{m,n})$ est utilisé à l'étape E14 pour déterminer un maillage "simple" de l'objet à mesurer. Ce maillage comprend des mailles superficielles $M_1$ à $M_K$ qui sont des surfaces quadrilatérales ou trilatérales, où K est un entier. De préférence, les mailles sont rendues planes par un lissage sur les valeurs des cotes $Z1_{m,n}$. Chaque maille $M_k$ a une superficie inférieure au champ de la sonde de mesure utilisée à l'étape E30 et détaillée en référence à la figure 9, k étant un indice entier compris entre 1 et K.

La formation du maillage est réalisée par l'ordinateur automatiquement ou de manière interactive avec un opérateur qui choisit par exemple des zones dans lesquels des points intermédiaires sont créés et des zones à ne pas mailler, par exemple les zones où les cotes mesurées correspondent à celles du plateau 11 et non à celles de l'objet à mesurer 15.

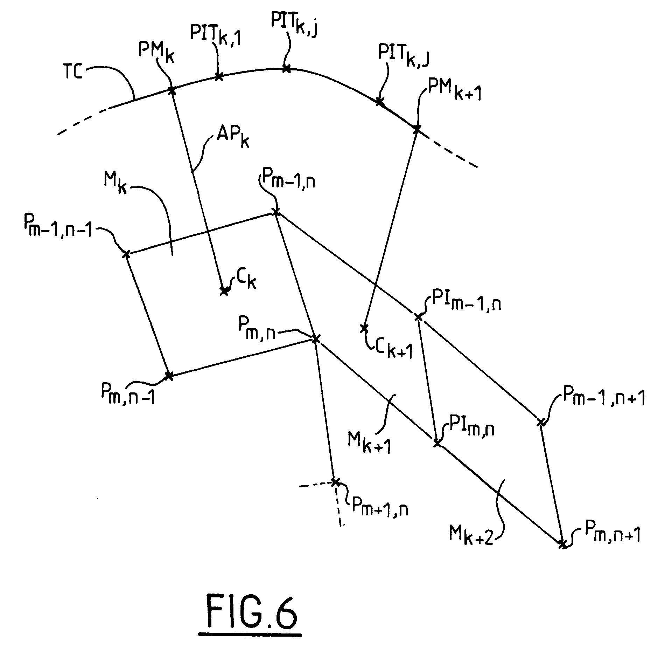

En référence à la figure 6, un fragment de maillage est formé à partir des points $P_{m-1,n-1}$, $P_{m-1,n}$, $P_{m-1,n+1}$, $P_{m,n-1}$, $P_{m,n}$, $P_{m,n+1}$ et $P_{m+1,n}$ de coordonnées respectives $(X1_{m-1}, Y1_{n-1}, Z1_{m-1,n-1})$, $(X1_{m-1}, Y1_n, Z1_{m-1,n})$, $(X1_{m-1}, Y1_{n+1}, Z1_{m-1,n+1})$, $(X1_m, Y1_{n-1}, Z1_{m,n-1})$, $(X1_m, Y1_n, Z1_{m,n})$, $(X1_m, Y1_{n+1}, Z1_{m,n+1})$ et $(X1_{m+1}, Y1_n, Z1_{m+1,n})$.

Pour garantir qu'une maille $M_k$ a une superficie inférieure à une valeur souhaitée prédéterminée, il faut comparer les valeurs de cotes de points voisins. En effet, les abscisses et ordonnées des points sont déterminées par l'intervalle entre deux positions de mesure adjacentes de la rampe 2 à l'étape E13 et la distance entre transducteurs adjacents sur la rampe 2; dans ces conditions seules les cotes des points influent sur la surface de la maille à former. Pour une zone comprenant des points ayant des cotes peu différentes, le maillage est l'association de quatre points voisins $P_{m-1,n-1}$, $P_{m-1,n}$, $P_{m,n-1}$ et $P_{m,n}$ en une maille quadrilatérale $M_k$. Pour une zone comprenant des points ayant des cotes différentes de plus d'un seuil prédéterminé, des points intermédiaires sont créés entre ces points.

En fonction de la différence des cotes de points voisins, un ou plusieurs points intermédiaires sont créés entre deux points de cotes différentes et sont régulièrement répartis sur une droite entre les deux points de cotes différentes. Par exemple, les points intermédiaires $PI_{m-1,n}$ et $PI_{m,n}$ sont créés respectivement entre les points $P_{m-1,n}$ et $P_{m-1,n+1}$, et $P_{m,n}$ et $P_{m,n+1}$. Deux mailles quadrilatérales $M_{k+1}$ et $M_{k+2}$ sont créées en associant à chaque fois quatre points voisins.

Le maillage à l'étape E14 est utilisé à l'étape E20 pour déterminer les différentes positions de mesure $PM_1$ à $PM_R$ du capteur de mesure de forme et la trajectoire TC de celui-ci.

En outre, les M x N triplets $(X1_m, Y1_n, Z1_{m,n})$ servent à déterminer des zones "interdites" dans lesquelles les positions de mesure $PM_1$ à $PM_R$ ne doivent pas se trouver afin d'éviter tout risque de collision lors du déplacement du capteur de mesure de forme. Une zone interdite est par exemple un parallélépipède qui englobe un obstacle possible pour le capteur, avec une marge de sécurité autour de l'obstacle.

En variante, l'étape principale E10, ou une partie des étapes E11 à E14 peut être supprimée, par exemple lorsqu'une modélisation de l'objet sous forme de points analogues aux points $P_{m,n}$, ou sous forme de mailles analogues aux mailles $M_k$ est déjà mémorisée et utilisable à l'étape E20.

Selon la figure 7, **l'étape principale E20** comprend un ensemble de traitements effectués successivement sur chaque maille $M_1$ à $M_K$. L'étape E21 est l'initialisation du traitement pour la première maille $M_1$. A l'étape E22, est déterminé le centre $C_k$ de la maille $M_k$, k étant un indice entier compris entre 1 et le nombre K de mailles déterminé à l'étape E14. Le centre $C_k$ est déterminé par calcul géométrique de l'intersection des segments de droite passant par les sommets de la maille $M_k$ lorsque celle-ci est un quadrilatère comme représenté à la figure 6. D'une manière générale, le centre $C_k$ est le barycentre de la maille $M_k$. En variante, l'étape E22 est remplacée par une étape de projection d'un réseau prédéterminé de points sur les mailles $M_1$ à $M_K$ de sorte qu'il y ait au moins un point projeté par maille. Dans la suite, les centres $C_k$ sont alors remplacés par les points projetés. L'étape E23 est la détermination d'un axe $AP_k$

sensiblement perpendiculaire à la maille $M_k$ et passant par le centre $C_k$.

Une position de mesure $PM_k$ est déterminée pour la maille $M_k$ à l'étape E24. La position de mesure $PM_k$ est un point de l'espace où sera positionné un moyen de mesure de forme qui est un capteur optique de mesure 3 détaillé dans la suite. La détermination de la position $PM_k$ est soumise à des conditions, parmi lesquelles :

- la distance entre la position de mesure $PM_k$ et le centre $C_k$ de la maille $M_k$ est égale à une valeur prédéterminée DOM qui est une distance optimale de mesure dépendant du capteur de mesure, valant à titre d'exemple 1250 mm $\pm$ 150 mm;
- la position de mesure est située sur l'axe $AP_k$ passant par le centre $C_k$ de sorte que l'axe optique de prise de vue est "perpendiculaire" à la surface de la maille $M_k$, ou faiblement incliné par rapport à la perpendiculaire de celle-ci si le capteur ne peut pas être positionné perpendiculairement à la maille $M_k$ pour des raisons mécaniques;
- au moins trois panneaux de repérage $16_e$, $16_h$ et $16_i$ sont visibles par le capteur depuis la position de mesure, les indices h et i étant différents de e et compris entre 1 et E;
- la portion superficielle mesurée par le capteur sur l'objet à mesurer 15 recouvre partiellement des portions superficielles mesurées adjacentes.

Si pour une position de mesure ces conditions sont contradictoires, des priorités sont affectées par l'opérateur aux conditions, ou l'opérateur choisit d'éliminer une condition, ou plusieurs positions de mesure sont déterminées pour une unique maille, chaque position respectant les conditions énoncées de manière à déterminer au moins une position de mesure pour la maille $M_k$.

La position de mesure $PM_k$ est mémorisée et comprend :

- la position de capteur sous la forme de coordonnées $(XM_k, YM_k, ZM_k)$ exprimée dans le référentiel fixe (O, X, Y, Z), et
- l'orientation du capteur sous la forme de site $SM_k$ de l'axe optique par rapport au plan horizontal (O, X, Y) et de gisement $GM_k$ de l'axe optique du capteur par rapport à l'un des trois axes du référentiel, par exemple l'axe X.

L'étape E25 vérifie si toutes les mailles $M_1$ à $M_K$ ont été sélectionnées pour déterminer des positions de mesure $PM_1$ à $PM_K$. S'il reste des mailles à sélectionner, les étapes E22 à E24 sont accomplies pour une nouvelle maille. Lorsque toutes les mailles ont été traitées, R positions de mesure $PM_1$ à $PM_R$ sont en mémoire, R étant un entier supérieur ou égal à K.

L'étape E26 détermine alors la trajectoire TC du capteur de mesure de forme pour relier les positions de mesure $PM_1$ à $PM_R$. L'ordre des positions dans la trajectoire est choisi de manière à favoriser le suivi d'une seule direction entre une succession de positions et à minimiser les déplacements du capteur pour l'ensemble de la trajectoire. Afin de ne pas compliquer les notations, il est supposé dans la suite que les positions de mesure ordonnées de la trajectoire sont renommées $PM_1$ à $PM_R$ successivement suivant leur ordre dans la trajectoire.

Entre deux positions consécutives $PM_k$ et $PM_{k+1}$, la trajectoire TC suit au mieux le maillage de l'objet à la distance optimale de mesure DOM, sans que le capteur ne s'approche à moins d'une distance de sécurité prédéterminée DS. Les coordonnées de points intermédiaires de trajectoire $PIT_{k,1}$ à $PIT_{k,J}$ entre les deux positions de mesure $PM_k$ et $PM_{k+1}$ sont calculées pour assurer que la distance de sécurité DS est respectée tout au long de la trajectoire, notamment dans des zones convexes, comme montré à la figure 6.

La détermination complète de la trajectoire comprend pour un déplacement entre deux positions de mesure, la détermination d'au moins un déplacement de l'un des éléments suivants :

- traverse 13 suivant l'axe X,
- crémaillère 14 suivant l'axe Y le long de la traverse 13 ou l'axe Z, et
- capteur de mesure en rotation comme exposé dans la suite.

Audit déplacement sont associées des vitesse et accélération choisies pour minimiser les vibrations. Cette détermination de trajectoire est effectuée de manière classique en robotique et comprend notamment la détermination des paramètres de commande des moteurs d'entraînement des traverse et crémaillères mobiles et capteur de mesure correspondant aux avances successives du capteur vers les positions de mesure $PM_1$ à $PM_R$.

Le maillage de l'objet à mesurer et la trajectoire TC sont de préférence tracés sur un écran de visualisation. Un opérateur peut alors par exemple modifier la trajectoire en une zone donnée.

En référence à la figure 8, **le capteur de mesure de forme** 3 comprend schématiquement un premier poignet articulé et motorisé 31, à l'extrémité duquel est fixé un support 32 pour une sonde optique de mesure 33 et pour un second poignet articulé et motorisé 34 sur lequel est montée une caméra de repérage 35.

Le premier poignet 31 est un poignet de robot classique, dit poignet à trois degrés de liberté, qui est adapté mécaniquement pour être accouplé avec l'outil préhenseur 141 comme montré à la figure 1 et comprend des connexions électriques et informatiques non représentées. En variante, le poignet 31 est lié de manière inamovible à l'extrémité inférieure de la crémaillère 14, à proximité de l'outil préhenseur 141, qui n'est alors utilisé que pour la rampe 2 précédemment décrite.

Le premier poignet articulé 31 définit le site par rapport au plan horizontal (O, X, Y) et le gisement par rapport à l'axe X de la sonde optique 33.

La sonde optique 33 relève successivement des portions superficielles de l'objet pour en déduire la forme tridimensionnelle de l'objet à mesurer selon la technique de profilométrie par codage de phase. En référence à la figure 9, la sonde 33 (FR-A-2 664 377) comprend schématiquement une source lumineuse 330 qui éclaire une mire 331 à franges ou lignes parallèles 332 qui présentent une variation spatiale d'intensité lumineuse dans une direction perpendiculaire à leur propre direction. Les rayons lumineux traversant la mire 331 sont projetés d'une manière connue à travers un système optique 333 pour former l'image de la mire sur une portion superficielle de l'objet à mesurer 15. De préférence P champs de franges présentant un pas de déphasage de $2\pi/P$ sont projetés successivement par déplacements latéraux de la mire 331, où P vaut à titre d'exemple 4 ou 8. Des photodétecteurs 334 répartis sur un support plan rectangulaire détectent l'image de la mire à travers un système optique 335. Les images sur les photodétecteurs 334 des lignes 332 sont représentatives de la portion superficielle de l'objet à mesurer.

Dans un référentiel local (OS, XS, YS, ZS) lié à la sonde 33, l'axe ZS étant orthogonal au plan des photodétecteurs 334, les cotes des points de la portion superficielle de l'objet à mesurer 15 sont déterminées par analyse de la phase du signal lumineux reçu par chaque photodétecteur 334. Par exemple pour P = 4, les signaux sortant des photodétecteurs sont sous la forme :

$$S_O = a + b.\cos\varphi,$$
$$S_1 = a + b.\sin\varphi,$$
$$S_2 = a - b.\cos\varphi,$$

et

$$S_3 = a - b.\sin\varphi.$$

Dans ces expressions, a et b sont des coefficients inconnus dépendant respectivement de la luminosité ambiante et du pouvoir réfléchissant de la portion superficielle de l'objet 15 et $\varphi$ est la phase modulo $2\pi$ du signal d'un photodétecteur et est obtenue par :

$$\varphi = arctg\frac{S_1 - S_3}{S_o - S_2}.$$

La phase $\varphi$ est déterminée à $2\pi$ près. Cette indétermination de phase est levée en projetant, au moyen d'une seconde mire, P champs de franges ayant un pas différent de celui des franges de la première mire et qui sont déphasés de $2\pi/P$ d'un champ au suivant, et en effectuant des calculs analogues sur les signaux des photodétecteurs.

Dans le référentiel local (OS, XS, YS, ZS) de la sonde, les cotes des points de la portion superficielle de l'objet à mesurer sont déterminées à partir des valeurs absolues des phases des signaux de sortie des photodétecteurs. Les abscisses et ordonnées des points de la surface de l'objet dépendent des abscisses et ordonnées des photodétecteurs, suivant des relations prédéterminées par des opérations classiques de calibration de la sonde 33.

Le volume utile de mesure de la sonde 33 est par exemple de 600 mm suivant l'axe XS, 400 mm suivant l'axe YS et 300 mm suivant l'axe ZS, avec un photodétecteur recouvrant environ 1,5 mm suivant les axes XS et YS et une précision d'environ 0,10 mm suivant l'axe ZS. Les dimensions de mesure de la sonde suivant les axes XS et YS sont égales aux dimensions du support plan rectangulaire des photodétecteurs 334 et définissent le champ de la sonde 33.

En référence à nouveau à la figure 8, le second poignet articulé 34 détermine l'orientation de la caméra 35 par rapport au support 32, c'est-à-dire par rapport à la sonde optique 33. Le bras articulé 34 est motorisé pour adopter des orientations discrètes avec une précision élevée, de l'ordre de $\pm 5$ µrad. Le nombre d'orientations possibles est typiquement compris entre plusieurs centaines et un millier.

La caméra de repérage 35 est une caméra CCD à laquelle est associé un référentiel de repérage (OR, XR, YR, ZR). La caméra de repérage 35 détermine avec précision les coordonnées $(XM_r, YM_r, ZM_r)$ de la position de mesure $PM_r$ dans le référentiel fixe (O, X, Y, Z), ces coordonnées étant connues de manière insuffisamment précise en raison notamment de la structure du portique 1.

Comme précisé précédemment, à une position de mesure $PM_r$ du capteur 3 sont associés au moins trois panneaux de repérage $16_e$, $16_h$ et 16i comprenant des points matérialisés par des cibles dont les coordonnées sont parfaitement connues dans le référentiel (O, X, Y, Z) du portique.

La caméra 35 est pointée successivement vers les trois panneaux de repérage. Le point d'intersection de l'axe optique de la caméra 35 et de chaque panneau est déterminé précisément par ses coordonnées dans le référentiel (O, X, Y, Z) grâce à la connaissance des coordonnées des cibles dans le référentiel (O,X,Y,Z).

Les trois points d'intersection et l'orientation de la caméra 35 lorsqu'elle est pointée vers les trois panneaux déterminent trois droites sécantes. L'expérience a montré que ces trois droites sont déterminées plus précisément lorsque la caméra 35 et les trois panneaux pointés $16_e$, $16_h$ et $16_i$ ne sont pas sensiblement dans un même plan ce qui est assuré par les hauteurs différentes des panneaux.

Le point d'intersection de ces trois droites est le centre OR du référentiel de repérage défini ci-après. L'axe ZR est sur la droite passant par l'un des points d'intersection et le centre OR; les axes XR et YR sont déterminés par rotation pour former les second et troisième axes du référentiel orthogonal de repérage. Une première matrice de transformation TR du référentiel de repérage au référentiel fixe est ainsi parfaitement établie pour la position $PM_r$ du capteur.

D'autre part, une seconde matrice de transformation TRS du référentiel local (OS, XS, YS, ZS) de la sonde 33 au référentiel de repérage (OR, XR, YR, ZR) est établie en fonction de l'orientation du poignet articulé 34.

Les matrices de transformation TR et TRS permettent de transformer les coordonnées $(X_s, Y_s, Z_s)$ d'un point quelconque de portion superficielle exprimées dans le repère de la sonde en les coordonnées $(X_F, Y_F, Z_F)$ du point exprimées dans le référentiel fixe :

$$\begin{pmatrix} X_F \\ Y_F \\ Z_F \end{pmatrix} = \text{TRS} \times \text{TR} \times \begin{pmatrix} X_S \\ Y_S \\ Z_S \end{pmatrix}$$

Dans l'expression précédente, la multiplication des matrices TRS et TR a pour résultat une troisième matrice de transformation du référentiel de la sonde 33 au référentiel fixe.

En variante, le support 32 est lié rigidiment à la crémaillère 14, la sonde 33 est reliée au support 32 par l'intermédiaire d'un poignet articulé analogue au poignet 34 et la caméra 35 est réliée au support 32 par le poignet 34. Selon une autre variante, le capteur de mesure 3 ne comprend pas de poignet articulé 34 ni de caméra de repérage 35. Le repérage de la position du capteur 3 est effectué par la sonde de mesure 33 de manière analogue à celle précédemment décrite. Dans ce cas, la sonde de mesure 33 est utilisée alternativement pour le repérage et pour la mesure de l'objet à mesurer.

Selon encore une autre variante, le capteur de mesure 3 comprend en outre un dispositif anticollision pour détecter la proximité d'obstacle lors du déplacement du capteur 3, grâce à au moins cinq transducteurs à ultrasons dont par exemple quatre sont dirigés horizontalement suivant des directions différentes, par exemple deux à deux opposées, et un est dirigé verticalement vers le bas. Le dispositif anticollision contrôle en permanence pendant toute la durée de la mesure que le capteur 3 demeure à une distance suffisante de tout obstacle. Le dispositif anticollision est complémentaire de la détermination des zones interdites et est particulièrement avantageux lorsque des obstacles sont susceptibles d'être sur la trajectoire du capteur 3 alors qu'ils étaient absents à l'étape E10.

En référence à la figure 10, **l'étape principale de mesure E30** comprend une première étape E31 de montage du capteur 3 sur l'outil préhenseur 141 de la crémaillère 14 du portique. Ce montage comprend une liaison mécanique du capteur et de l'outil préhenseur ainsi qu'une liaison électrique et informatique.

L'étape de montage n'est pas réalisée lorsque le capteur 3 est lié de manière inamovible à la crémaillère 14.

L'étape E32 est l'initialisation de la mesure. Le capteur de mesure 3 est déplacé depuis la position de montage et positionné à la première position de mesure $PM_1$ de la trajectoire TC de sorte que le centre OS du référentiel lié à la sonde 33 coïncide avec la position de mesure $PM_1$ et que l'orientation de la sonde et du référentiel (OS, XS, YS, ZS) est celle définie par le site $SM_1$ et le gisement $GM_1$ de la première position $PM_1$ par rapport au référentiel fixe (O, X, Y, Z).

Les étapes E33 à E36 sont ensuite accomplies pour chaque position de mesure $PM_1$ à $PM_R$ de la trajectoire TC.

A l'étape E33 le capteur de mesure 3 est déplacé depuis la position $PM_{r-1}$ jusqu'à la position $PM_r$. Comme déjà dit, ce déplacement est défini par la trajectoire TC et réalisé par des déplacements simultanés ou successifs de la traverse 13, de la crémaillère 14 et du poignet articulé 31.

Lorsque le capteur 3 a atteint la position de mesure $PM_r$, le repérage et la mesure de portion superficielle sont effectués après un intervalle de temps prédéterminé valant entre 10 et 20 secondes environ, le capteur étant considéré stable à l'expiration dudit intervalle de temps.

L'étape E34 réalise la mesure de portion superficielle de l'objet 15 telle que décrite précédemment en référence à la figure 9.

L'étape E35 est le repérage précis de la position de la sonde 33 dans le référentiel fixe (O, X, Y, Z) lié au portique 1 au moyen de la caméra de repérage 35 pointant successivement les trois panneaux $16_e$, $16_h$ et $16_i$ comme décrit précédemment.

En variante, les étapes de mesure et de repérage sont effectuées en parallèle, ou selon une autre variante le repérage précède la mesure.

L'étape E36 est le changement de référentiel des coordonnées mesurées à l'étape E34 dans le référentiel de la sonde pour les exprimer dans le référentiel fixe (O, X, Y, Z) du portique. Cette étape est réalisée par le calcul matriciel des transformations entre les référentiels de la sonde de mesure, de repérage et fixe, tel que précédemment décrit. Les coordonnées exprimées dans le référentiel fixe (O, X, Y, Z) sont alors mémorisées.

L'étape E37 vérifie que toutes les positions $PM_1$ à $PM_R$ de la trajectoire TC ont été parcourues par le capteur. Si ce n'est pas le cas, les étapes E33 à E37 sont accomplies pour une nouvelle position. Lorsque toute la trajectoire TC a été parcourue, l'étape principale E30 de mesure est terminée.

De préférence, un opérateur peut intervenir pour modifier les étapes E32 à E36. En particulier, l'opérateur peut supprimer des positions de mesure pour ne pas faire de mesure dans une zone superficielle donnée. L'opérateur peut diviser la trajectoire TC en sous-trajectoires correspondant respectivement à une partie de l'objet à mesurer; Les sous-trajectoires sont parcourues successivement par la sonde. L'opérateur peut définir des positions de mesure supplémentaires pour mesurer plus précisément une partie superficielle de l'objet à mesurer. Les positions de mesure supplémentaires sont intercalées entre deux positions de mesure de la trajectoire et modifient ainsi cette dernière ou en variante forment une trajectoire supplémentaire qui est parcourue après la trajectoire TC.

Comme déjà précisé, le résultat de l'étape principale E30 est traité à l'étape E40 pour déterminer un modèle mathématique de l'objet 15.

## Revendications

**1 -** Procédé de mesure tridimensionnelle de la surface d'un objet (15) par un moyen de mesure de forme (3), caractérisé en ce qu'il comprend les étapes de

- déterminer approximativement (E20) des positions de mesure ($PM_1$ à $PM_R$) du moyen de mesure de forme (3),
- positionner le moyen de mesure de forme (3) successivement aux positions de mesure déterminées pour relever (E33, E34) la forme de portions superficielles de l'objet à mesurer (15), les portions superficielles relevées étant chacune représentées par des points de l'objet dont les coordonnées sont exprimées dans un référentiel (OS, XS, YS, ZS) lié au moyen de mesure de forme,
- repérer précisément (E35) dans un référentiel fixe prédéterminé (O, X, Y, Z) chacune desdites positions du moyen de mesure de forme (3) par un moyen de repérage (35), et
- transformer (E36) les coordonnées des points de portions superficielles exprimées dans le repère lié au moyen de mesure de forme en des coordonnées desdits points exprimées dans ledit référentiel fixe (O, X, Y, Z) en fonction respectivement des positions du moyen de mesure de forme repérées dans le référentiel fixe.

**2 -** Procédé de mesure conforme à la revendication 1, caractérisé en ce que l'étape de déterminer approximativement des positions de mesure (E20) comprend :

- mailler (E10) une surface de l'objet à mesurer (15) en des mailles superficielles ($M_k$),
- sélectionner (E22) au moins un point ($C_k$) sur chaque maille ($M_k$),
- définir (E23) un axe sensiblement perpendiculaire ($AP_k$) à la maille ($M_k$) passant par ledit au moins un point ($C_k$), et
- déterminer (E24) une position de mesure ($PM_k$) sensiblement située sur ledit axe ($AP_k$).

**3 -** Procédé de mesure conforme à la revendication 2, caractérisé en ce que l'étape de mailler (E10) comprend les étapes de :

- positionner (E12, E13) un moyen de mesure de distance (2) en des positions prédéterminées successives ($PR_m$) réparties dans un espace de mesure (1),
- mesurer (E12, E13) une distance ($Z_{m,n}$, $Z1_{m,n}$) dudit moyen de mesure de distance ($22_n$) par rapport à l'objet à mesurer (15) pour chacune des positions prédéterminées dudit moyen de mesure de distance, et
- déterminer (E14) les mailles ($M_k$) de l'objet à mesurer (15) en fonction de la distance mesurée.

**4 -** Procédé de mesure conforme à la revendication 2, caractérisé en ce que l'étape de mailler (E10) comprend les étapes de :

- positionner (E12) au moins un moyen de mesure de distance ($22_n$) en des premières positions prédéterminées successives ($PR_m$) réparties dans un plan parallèle à un support (11) sur lequel repose l'objet (15), et mesurer (E12) une première distance ($Z_{m,n}$) du moyen de mesure de distance par rapport à l'objet pour chacune des premières positions prédéterminées,
- calculer (E13) des secondes positions ($ZP_m$) respectivement en fonction des premières positions ($PR_m$) et des premières distances afin que les secondes positions soient à des secondes distances ($DM + \max(Z_{m,1}$ à $Z_{m,N})$) par rapport à l'objet comprises dans un intervalle prédéterminé,
- positionner (E13) le moyen de mesure de distance ($22_n$) successivement aux secondes positions ($ZP_m$) et mesurer (E13) une seconde distance ($Z1_{m,n}$) du moyen de mesure de distance par rapport à l'objet pour chacune des secondes positions calculées, et
- déterminer (E14) les mailles ($M_k$) de l'objet à mesurer (15) en fonction des secondes distances mesurées ($Z1_{m,n}$).

**5 -** Procédé de mesure conforme à la revendication 3 ou 4, caractérisé en ce que l'étape de mailler (E10) comprend en outre l'étape de

déterminer au moins une zone de l'espace dans laquelle ne se trouve aucune des positions de mesure ($PM_1$ à $PM_R$) du moyen de mesure de forme (3).

**6 -** Procédé de mesure conforme à l'une quelconque des revendications 1 à 5, caractérisé en ce que l'étape de repérer (E35) comprend les étapes de :

- pointer un moyen de repérage (35) lié au moyen de mesure de forme (3) successivement vers au moins trois points prédéterminés dans le référentiel fixe (O, X, Y, Z),
- déterminer les orientations du moyen de repérage (35) dans le référentiel fixe (O, X, Y, Z) pour les pointages successifs du moyen de repérage,

- définir un référentiel de repérage (OR, XR, YR, ZR) lié au moyen de repérage (35), en fonction desdits trois points et desdites orientations, et
- établir une première matrice de transformation (TR) du référentiel de repérage au référentiel fixe (O, X, Y, Z).

**7** - Procédé de mesure conforme à la revendication 6, caractérisé en ce que l'étape de transformer (E36) comprend les étapes de :

- établir une seconde matrice de transformation (TRS) du référentiel (OS, XS, YS, ZS) lié au moyen de mesure (3) au référentiel de repérage (OR, XR, YR, ZR), et
- établir une troisième matrice de transformation (TRS x TR) du référentiel lié au moyen de mesure de forme (3) au référentiel fixe, en fonction desdites première et seconde matrices.

**8** - Dispositif de mesure tridimensionnelle d'un objet (15) pour mettre en oeuvre le procédé de mesure conforme à l'une quelconque des revendications 1 à 7, comprenant un moyen mobile de mesure de forme d'objet (3) sans contact avec l'objet à mesurer, caractérisé en ce qu'il comprend, en outre,

- un moyen mobile de mesure de distance (2) pour mesurer des distances ($Z_{m,n}$ , $Z1_{m,n}$) dudit moyen mobile de mesure de distance par rapport à l'objet à mesurer (15) pour des positions de mesure prédéterminées ($PR_m$) du moyen de mesure de distance,
- des moyens (12, 13, 14;31) pour positionner successivement ledit moyen de mesure de distance (2) auxdites positions prédéterminées ($PR_m$), puis pour positionner ledit moyen de mesure de forme (3) à des positions ($PM_r$) déterminées en fonction des positions prédéterminées ($PR_m$) du moyen de mesure de distance et des distances mesurées ($Z_{m,n}$ , $Z1_{m,n}$), afin que le moyen mobile de mesure de forme (3) relève la forme de portions superficielles de l'objet à mesurer (15) aux positions déterminées, et
- des moyens ($16_1$ à $16_E$, 35) pour repérer les positions déterminées dudit moyen de mesure de forme (3) dans un référentiel fixe prédéterminé (O, X, Y, Z).

**9** - Dispositif de mesure conforme à la revendication 8, caractérisé en ce que le moyen de mesure de distance (2) comprend au moins un transducteur à ultrasons ($22_n$).

**10** - Dispositif de mesure conforme à la revendication 8, caractérisé en ce que le moyen de mesure de distance comprend une rampe (2) portant des transducteurs à ultrasons ($22_n$), ou bien deux rampes sensiblement perpendiculaires portant chacune des transducteurs à ultrasons.

**11** - Dispositif de mesure conforme à l'une quelconque des revendications 8 à 10, caractérisé en ce que le moyen de mesure de forme (3) comprend une sonde optique (33) pour relever la forme de portions superficielles de l'objet à mesurer (15).

**12** - Dispositif de mesure conforme à la revendication 11, caractérisé en ce que la sonde optique (33) comprend une source lumineuse (330) pour éclairer une mire (331) à franges parallèles et former l'image de la mire successivement sur chacune des portions superficielles de l'objet (15), et des photodétecteurs (334) pour détecter l'image de la mire.

**13** - Dispositif de mesure conforme à l'une quelconque des revendications 8 à 12, caractérisé en ce que les moyens pour repérer comprennent une caméra (35) montée mobile sur le moyen de mesure de forme (3) et orientable de manière indépendante par rapport au moyen de mesure de forme (3), et des panneaux fixes de repérage ($16_1$ à $16_E$) sur des faces desquels sont situées des cibles de repérage ($162_{e,f}$) dont les coordonnées sont connues dans le référentiel fixe (O, X, Y, Z).

**14** - Dispositif de mesure conforme à l'une quelconque des revendications 8 à 13, caractérisé en ce que l'un au moins des moyen de mesure de distance (2) et moyen de mesure de forme (3) comprend un moyen pour détecter la proximité d'obstacle lors d'un déplacement dudit au moins un des moyen de mesure de distance et moyen de mesure de forme (3).

FIG.1

E10

(FIG.3)

Maillage

E 20

(FIG.7)

Trajectoire

E 30

(FIG.10)

Mesure

E 40

Modèle

## FIG.2

E 10

E 11 | Montage Transducteurs à ultrason $22_n$ (FIG.4)

E 12 | Premier cycle (FIG.5) de déplacement et mesure $(X_m, Y_n, Z_{m,n})$

E 13 | Second cycle de déplacement et mesure $(X1_m, Y1_n, Z1_{m,n})$

E 14 | Détermination du maillage (FIG.6)

## FIG.3

FIG.4

FIG.5

# FIG.6

E20

E21 | k = 1

E22 | Détermination du centre $C_k$ de la maille $M_k$

E23 | Détermination de l'axe "perpendiculaire" à la maille $M_k$

E24 | Détermination d'une position de capteur de mesure $PM_k$ ; Mémorisation $(XM_k, YM_k, ZM_k, SM_k, GM_k)$

E25 | non — k = K — oui

k = k + 1

E26 | Détermination de la trajectoire $TC$ du capteur de mesure

FIG.7

FIG.8

## FIG.9

E30

E 31 — Montage Capteur 3
FIG.8

E 32 — Initialisation : r = 1

E 33 — Position PM $_r$

E 34 — Mesure de forme de
portion superficielle

E 35 — Repérage du capteur

E 36 — Changement Référentiel
Mémorisation

E 37 — non ⟨ r = R ⟩ oui

r = r + 1

FIN

# FIG.10

EP 0 683 379 A1

**Office européen des brevets**

# RAPPORT DE RECHERCHE EUROPEENNE

Numero de la demande

EP 95 40 1125

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | WO-A-86 01897 (SHORT BROTHERS PLC) <br> * page 8, ligne 31 - page 16, ligne 2; figures 1-3 * | 1 | G01B11/24 |
| A | | 2,5 | |
| Y | WO-A-93 08448 (ELECTRO-OPTICAL INFORMATION SYSTEMS) <br> * page 14, ligne 13 - page 17, ligne 18; figure 1 * | 1 | |
| A | | 11,12 | |
| A | PATENT ABSTRACTS OF JAPAN <br> vol. 18 no. 216 (P-1728) ,18 Avril 1994 <br> & JP-A-06 018253 (FUJITA CORP.) 25 Janvier 1994, <br> * abrégé * | 3,8-10 | |
| A | EP-A-0 489 641 (COMMISSARIAT A L'ENERGIE ATOMIQUE) <br> * page 4, ligne 10 - ligne 31; revendication 1; figure 2 * | 1,6,8, 11,12 | |
| | | | **DOMAINES TECHNIQUES RECHERCHES (Int.Cl.6)** |
| | | | G01B |

Le présent rapport a été établi pour toutes les revendications

| Lieu de la recherche | Date d'achèvement de la recherche | Examinateur |
|---|---|---|
| LA HAYE | 3 Août 1995 | Chapple, I |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

23